# EUROPEAN PATENT APPLICATION

(11) **EP 4 851 622 A1**
(43) Date of publication of application: **09.12.2026**
(21) Application number: 26181407.3
(22) Date of filing: 27.05.2026
(51) Int. Cl.: G01N 30/78, G01N 30/64, G01N 30/74, G01N 30/96

(54) **INTEGRATED FLOW CELLS FOR SIMULTANEOUS CONDUCTANCE AND OPTICAL MEASUREMENTS IN LIQUID AND ION CHROMATOGRAPHY**

(30) Priority: 05.06.2025 US 202563818241 P
(71) Applicant: Dionex Corporation, Sunnyvale, CA 94085 (US)
(72) Inventor: LIU, Yan, Sunnyvale (US); AL-ESAWI, Husam, Sunnyvale (US)
(74) Representative: Boult Wade Tennant LLP

(57) **Abstract**

A detector module for combined optical and conductance measurements includes a flow cell, a light source to produce light, and an optical detector for detecting light from the light source. The flow cell includes a substrate, a flow path formed on the substrate, a conductivity sensor including a plurality of electrodes within the flow path, a first optical window at the first end of a linear segment of the flow path, and a second optical window at the second end of the linear segment. The light source is positioned in proximity to the first optical window, The optical detector is positioned in proximity to the second optical window. Light from the light source travels along a light path from the light source, through the first optical window, along the linear segment, through the second optical window, and to the optical detector.

## Description

### FIELD

The present disclosure generally relates to the field of analytical chemistry including integrated flow cells for simultaneous conductance and optical measurements in liquid and ion chromatography.

### BACKGROUND

Liquid chromatography (LC) is an analytical technique using a liquid mobile phase to carry the sample through a stationary phase, allowing for the separation of different compounds based on their interactions with the stationary phase. LC can be used to separate, identify, and quantify components within a mixture. Ion chromatography (IC) is a subset of LC used specifically used for separation and detection of anionic and cationic analytes in various sample matrices. Optical detectors, particularly Ultraviolet-Visible (UV-VIS) detectors, can be used for the detection of compounds in the sample, while conductivity detectors can be used to detect anionic and cationic analytes. Therefore, there is a need for a more robust liquid chromatography system that can be used for a variety of analytes.

### BRIEF SUMMARY

In a first embodiment, a detector module for combined optical and conductance measurements can include a flow cell. The flow cell can include a substrate, a flow path formed on the substrate, a conductivity sensor including a plurality of electrodes within the flow path, a first optical window, and a second optical window. The flow path can include an entrance, a linear segment, and an exit. The linear segment can have a first end and a second end. The first optical window can be at the first end of the linear segment, and the second optical window can be at the second end of the linear segment. The detector module can further include a light source to produce light and an optical detector for detecting light. The light source can be positioned in proximity to the first optical window, and the optical detector can be positioned in proximity to the second optical window. Light from the light source can travels along a light path from the light source, through the first optical window, along the linear segment, through the second optical window, and to the optical detector.

In various embodiments of the first aspect, the substrate can be thermally regulated.

In various embodiments of the first aspect, the detector module further includes an entrance segment between the entrance and the linear segment. In particular embodiments, the conductivity sensor can be positioned along the entrance segment.

In various embodiments of the first aspect, the detector module can further include an exit segment between the linear segment and the exit. In particular embodiments, the conductivity sensor can be positioned along the exit segment.

In various embodiments of the first aspect, the conductivity sensor can be positioned along the linear segment.

In various embodiments of the first aspect, the light source can be an ultraviolet-visible (UV-Vis) light source and the optical detector is a (UV-Vis) detector.

In various embodiments of the first aspect, the optical detector can be a fluorescence spectrometer or a Raman spectrometer.

In various embodiments, a chromatography system can include a pump; a chromatography column; and the detector module of the first aspect. In particular embodiments, the chromatography system can further include a suppressor positioned between the chromatography column and the detector module.

In a second aspect, a method of analyzing a sample includes supplying a sample to a chromatography column; eluting sample compounds from the chromatography column; and flowing the sample compounds from the chromatography column to a detector module. The detector module can include a flow cell. The flow cell can include a substrate, a flow path formed on the substrate, a conductivity sensor including a plurality of electrodes within the flow path, a first optical window, and a second optical window. The flow path can include an entrance, a linear segment, and an exit. The linear segment can have a first end and a second end. The first optical window can be at the first end of the linear segment, and the second optical window can be at the second end of the linear segment. The detector module can further include a light source to produce light and an optical detector for detecting light. The light source can be positioned in proximity to the first optical window, and the optical detector can be positioned in proximity to the second optical window. The method can further include providing light from the light source along a light path through the first optical window, along the linear segment, through the second optical window, and to the optical detector; and obtaining optical measurement data using the optical detector and conductivity data using the conductivity detector of the sample compounds flowing through the flow cell.

In various embodiments of the second aspect, the method can further include thermally regulating the substrate.

In various embodiments of the second aspect, the flow path can further include an entrance segment between the entrance and the linear segment. In particular embodiments, the conductivity sensor can be positioned along the entrance segment of the flow path.

In various embodiments of the second aspect, the flow path can further include an exit segment between the linear segment and the exit. In particular embodiments, the conductivity sensor can be positioned along the exit segment of the flow path.

In various embodiments of the second aspect, the conductivity sensor is positioned along the linear segment of the flow path.

In various embodiments of the second aspect, the light source can be an ultraviolet-visible (UV-Vis) light source, the optical detector can be a (UV-Vis) detector, and the optical measurement data can be a UV-Vis absorbance spectra.

In various embodiments of the second aspect, the method can further include reducing eluent conductivity background and enhancing analyte response using a suppressor after the chromatography column and prior to the detector module.

In various embodiments of the second aspect, the method can further include identifying and/or quantifying sample compounds based on the optical measurement data and the conductivity data.

In various embodiments of the second aspect, the optical measurement data can be an absorbance measurement, a fluorescence measurement, a Raman scattering measurement, or any combination thereof.

These and other objects and advantages shall be made apparent from the accompanying drawings and the description thereof.

### BRIEF DESCRIPTION OF THE FIGURES

The accompanying drawings, which are incorporated in and constitute a part of this specification, illustrate embodiments, and together with the general description given above, and the detailed description of the embodiments given below, serve to explain the principles of the present disclosure.
FIG. 1 is a block diagram illustrating an exemplary chromatography system, in accordance with various embodiments
FIGs. 2A, 2B, and 2C illustrate exemplary flow cells for simultaneous conductance and optical measurements, in accordance with various embodiments.
FIG. 3 illustrates an exemplary method of analyzing a sample, in accordance with various embodiments.

### DETAILED DESCRIPTION

Embodiments of integrated flow cells for simultaneous conductance and optical measurements in liquid and ion chromatography are described herein.

The section headings used herein are for organizational purposes only and are not to be construed as limiting the described subject matter in any way.

Unless otherwise defined, all technical and scientific terms used herein have the same meaning as commonly understood by one of ordinary skill in the art. For example, any nomenclatures used in connection with, and techniques of analytical chemistry and biochemistry, described herein are well known and commonly used in the art. In case of conflict, the present disclosure, including definitions, will control. Exemplary methods and materials are described below, although methods and materials similar or equivalent to those described herein can be used in practice or testing of the embodiments and aspects described herein.

In this detailed description of the various embodiments, for purposes of explanation, numerous specific details are set forth to provide a thorough understanding of the embodiments disclosed. One skilled in the art will appreciate, however, that these various embodiments may be practiced with or without these specific details. In other instances, structures and devices are shown in block diagram form. Furthermore, one skilled in the art can readily appreciate that the specific sequences in which methods are presented and performed are illustrative and it is contemplated that the sequences can be varied and still remain within the spirit and scope of the various embodiments disclosed herein.

All literature and similar materials cited in this application, including but not limited to, patents, patent applications, articles, books, treatises, and internet web pages are expressly incorporated by reference in their entirety for any purpose. Unless described otherwise, all technical and scientific terms used herein have a meaning as is commonly understood by one of ordinary skill in the art to which the various embodiments described herein belongs.

It will be appreciated that there is an implied "about" prior to the temperatures, concentrations, times, pressures, flow rates, cross-sectional areas, etc. discussed in the present teachings, such that slight and insubstantial deviations are within the scope of the present teachings. In this application, the use of the singular includes the plural unless specifically stated otherwise. Also, the use of "comprise", "comprises", "comprising", "contain", "contains", "containing", "include", "includes", and "including" are not intended to be limiting. It is to be understood that both the foregoing general description and the following detailed description are exemplary and explanatory only and are not restrictive of the present teachings.

As used herein, "a" or "an" also may refer to "at least one" or "one or more." Also, the use of "or" is inclusive, such that the phrase "A or B" is true when "A" is true, "B" is true, or both "A" and "B" are true. Further, unless otherwise required by context, singular terms shall include pluralities and plural terms shall include the singular.

As used herein, the term "substantially" means to a great or significant extent, but not completely.

As used herein, the term "about" or "approximately" as applied to one or more values of interest, refers to a value that is similar to a stated reference value, or within an acceptable error range for the particular value as determined by one of ordinary skill in the art, which will depend in part on how the value is measured or determined, such as the limitations of the measurement system. In one aspect, the term "about" refers to any values, including both integers and fractional components that are within a variation of up to ± 10% of the value modified by the term "about." Alternatively, "about" can mean within 3 or more standard deviations, per the practice in the art. Alternatively, such as with respect to biological systems or processes, the term "about" can mean within an order of magnitude, in some embodiments within 5-fold, and in some embodiments within 2-fold, of a value. As used herein, the symbol "~" means "about" or "approximately."

All ranges disclosed herein include both end points as discrete values as well as all integers and fractions specified within the range. For example, a range of 0.1-2.0 includes 0.1, 0.2, 0.3, 0.4 . . . 2.0. If the end points are modified by the term "about," the range specified is expanded by a variation of up to ±10% of any value within the range or within 3 or more standard deviations, including the end points, or as described above in the definition of "about."

As used herein, the terms "room temperature," "RT," or "ambient temperature" refer to the typical temperature in an indoor laboratory setting. In one aspect, the laboratory setting is climate controlled to maintain the temperature at a substantially uniform temperature or with a specific range of temperatures. In one aspect, "room temperature" refers a temperature of about 15-30 °C, including all integers and endpoints within the specified range. In another aspect, "room temperature" refers a temperature of about 15-30 °C; about 20-30 °C; about 22-30 °C; about 25-30 °C; about 27-30 °C; about 15-22 °C; about 15-25 °C; about 15-27 °C; about 20-22 °C; about 20-25 °C; about 20-27 °C; about 22-25 °C; about 22-27 °C; about 25-27 °C; about 15 °C ± 10%; about 20 °C ± 10%; about 22 °C ± 10%; about 25 °C ± 10%; about 27 °C ± 10%; ~20 °C, ~22 °C, ~25 °C, or ~27 °C, at standard atmospheric pressure.

As used herein, the terms "control," or "reference" are used herein interchangeably. A "reference" or "control" level may be a predetermined value or range, which is employed as a baseline or benchmark against which to assess a measured result. "Control" also refers to control experiments or control cells.

As used herein, "in fluid connection" or "fluidically connected" refers to two objects being positioned and connected so that a fluid may flow from one to another.

As used herein, "exemplary" refers to one or many examples or iterations. "Exemplary" is not intended to be limiting and should not be construed as being representative of the best of its kind.

A "system" sets forth a set of components, real or abstract, comprising a whole where each component interacts with or is related to at least one other component within the whole.

In liquid chromatography, it can be useful to obtain measurements using multiple detection techniques. For example, UV-VIS absorption spectra can be useful detect target analytes in a sample, while conductivity measurements can be useful in detecting changes in the amount of ions in a solution. Often, a single detection technique can provide significant information about certain classes of compounds, but may not provide sufficient useful information for other classes of compounds. Frequently, a chromatography system may include multiple detector modules with the eluent either being split and sent to the various detector modules in parallel or connecting the detector modules in series. This can present a challenge in aligning the chromatograms from the various detector modules as the offset is a function of the flow rate, the tubing size, and the distance the eluent must travel to reach the detector. As described herein, a single flow cell can be used for both conductivity measurements and optical measurements. This simplifies the chromatography system, reducing the number of detector modules and the number of fluidic connections. Additionally, since the conductivity measurement and the optical measurement in close proximity, the alignment of the conductivity chromatogram and the optical chromatogram is simplified.

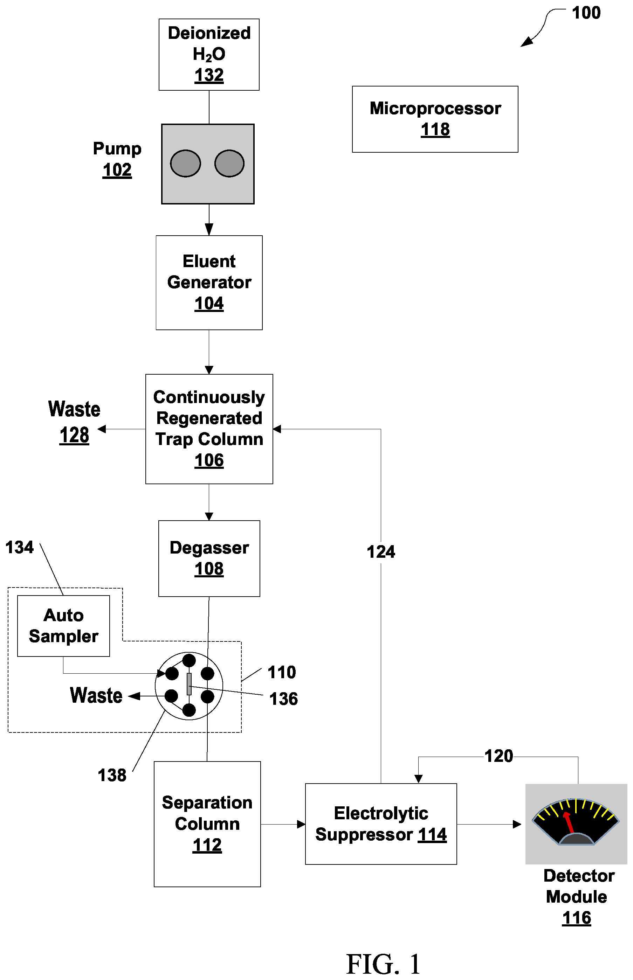

Figure 1 illustrates an embodiment of a chromatography system 100. Chromatography system 100 may include a pump 102, an electrolytic eluent generator 104, a continuously regenerated trap column 106, a degasser 108, a sample injector 110, a chromatographic separation device 112, an electrolytic suppressor 114, a detector module 116, and a microprocessor 118. Chromatographic separation device 112 may be in the form of a capillary column or an analytical column. Line 120 may be used to transfer the liquid from an output of detector module 116 to an inlet of the electrolytic suppressor 114. Line 124 may be used to transfer liquid from an outlet of the regenerant channel of the electrolytic suppressor 114 to an inlet of the continuously regenerated trap column 106. Recycle line 126 can be used to transfer liquid from an outlet of the continuously regenerated trap column 106 to waste 128.

Pump 102 can be configured to pump a liquid from a liquid source 132, such as deionized water, and be fluidically connected to electrolytic eluent generator 104. Pump 102 can be configured to transport the liquid at a pressure ranging from about 20 PSI to about 15,000 PSI. Under certain circumstances, pressures greater than 15,000 PSI may also be implemented. It should be noted that the pressures denoted herein are listed relative to an ambient pressure (13.7 PSI to 15.2 PSI). Pump 102 may be in the form of a high-pressure liquid chromatography (HPLC) pump. In addition, pump 102 can also be configured so that the liquid only touches an inert portion of pump 102 so that a significant amount of impurities does not leach out. In this context, significant means an amount of impurities that would interfere with the intended measurement. For example, the inert portion can be made of inert polymers, such as polyether ether ketone (PEEK) or at least coated with a PEEK lining, which does not leach out a significant amount of ions or other contaminants when exposed to a liquid.

An eluent is a liquid that contains an acid, base, salt, or mixture thereof and can be used to elute an analyte through a chromatography column. In addition, an eluent can include a mixture of a liquid and a water miscible organic solvent, where the liquid may include an acid, base, salt, or combination thereof. Electrolytic eluent generator 104 is configured to generate a generant. A generant refers to a particular species of acid, base, or salt that can be added to the eluent. In an embodiment, the generant may be a base such as cation hydroxide or the generant may be an acid such as carbonic acid, phosphoric acid, acetic acid, methanesulfonic acid, or a combination thereof.

Referring to Figure 1, eluent generator 104 can be configured to receive the liquid from pump 102 and then add a generant to the liquid. The liquid containing the generant can be outputted from eluent generator 104 to an inlet of continuously regenerated trap column 106.

Continuously regenerated trap column 106 is configured to remove cationic or anionic contaminants from the eluent. Continuously regenerated trap column 106 can include an ion exchange bed with an electrode at the eluent outlet. An ion exchange membrane stack can separate the eluent from a second electrode and contaminant ions can be swept through the ion exchange membrane stack towards the second electrode. The ion exchange membrane stack can include one or more ion exchange membranes. In various embodiments, anion removal can utilize an anion exchange bed with a cathode at the eluent outlet separated from an anode by an anion exchange membrane. Alternatively, cation removal can utilize a cation exchange bed with an anode at the eluent outlet separated from a cathode by a cation exchange membrane.

Degasser 108 may be used to remove residual gas. In an embodiment, a residual gas may be electrolytically generated such as hydrogen or oxygen or both. Degasser 108 may include a tubing section that is gas permeable and liquid impermeable such as, for example, a polymeric tubing. The flowing liquid can be outputted from degasser 108 to sample injector 110 with a substantial portion of the gas removed.

Sample Injector 110 can be used to inject a bolus of a liquid sample into an eluent stream. The liquid sample may include a plurality of chemical constituents (i.e., matrix components) and one or more analytes of interest. The sample injector 110 can include an auto sampler 134, sample loop 136, and a multiport valve 138. The auto sampler 134 can draw a sample from a sample container. The multiport valve 138 can be in a first position to allow the sample to fill the sample loop 136. After the sample loop 136 is filled to the desired level, the multiport valve can switch to a second position and the eluent stream can drive the sample onto the chromatographic separation device 112.

Chromatographic separation device 112 can be used to separate various matrix components present in the liquid sample from the analyte(s) of interest and separate the analytes of interest from each other. Typically, chromatographic separation device 112 may be in the form of a hollow cylinder that contains a packed stationary phase. As the liquid sample flows through chromatographic separation device 112, the matrix components and target analytes can have a range of retention times for eluting off of chromatographic separation device 112. Depending on the characteristics of the target analytes and matrix components, they can have different affinities to the stationary phase in chromatographic separation device 112. An output of chromatographic separation device 112 can be fluidically connected to electrolytic suppressor 114.

Suppressor 114 can be used to reduce eluent conductivity background and enhance analyte response through efficient exchange of eluent counter ions for regenerant ions. One type of suppressor is an electrolytic suppressor 114 can include an anode chamber, a cathode chamber, and an eluent suppression bed chamber separated by ion exchange membranes. The anode chamber and/or cathode chamber can produce regenerate ions or transport supplied regenerant ions. The eluent suppression bed chamber can include a flow path for the eluent separated from the regenerant by an ion exchange barrier and eluent counterions can be exchanged with regenerate ions across the ion exchange barrier. An output of electrolytic suppressor 114 can be fluidically connected to detector module 116 to measure the presence of the separated chemical constituents of the liquid sample. The suppressor 114 can also be of the chemical kind that requires a chemical regenerant for operation. Any suppressor in the prior art is suited for the present application with multiple channels as configured.

Detector module 116 may be in the form of ultraviolet-visible spectrometer, a fluorescence spectrometer, Raman spectrometer, a refractive index detector, a radio flow detector, a chiral detector, an electrochemical detector, a conductivity detector, mass spectrometer, or a combination thereof. The detector module 116 is preferably a non-destructive detector such as a combined conductivity detector that substantially preserves the eluent stream from the suppressor eluent output.

An electronic circuit may include microprocessor 118, a timer, and a memory portion. In addition, the electronic circuit may include a power supply that are configured to apply a controlling signal, respectively. Microprocessor 118 can be used to control the operation of chromatography system 100. Microprocessor 118 may either be integrated into chromatography system 100 or be part of a personal computer that communicates with chromatography system 100. Microprocessor 118 may be configured to communicate with and control one or more components of chromatography system such as pump 102, pump 130, eluent generator 104, sample injector 110, and detector module 116. The memory portion may be used to store instructions to set the magnitude and timing of the current waveform with respect to the switching of sample injector 110 that injects the sample.

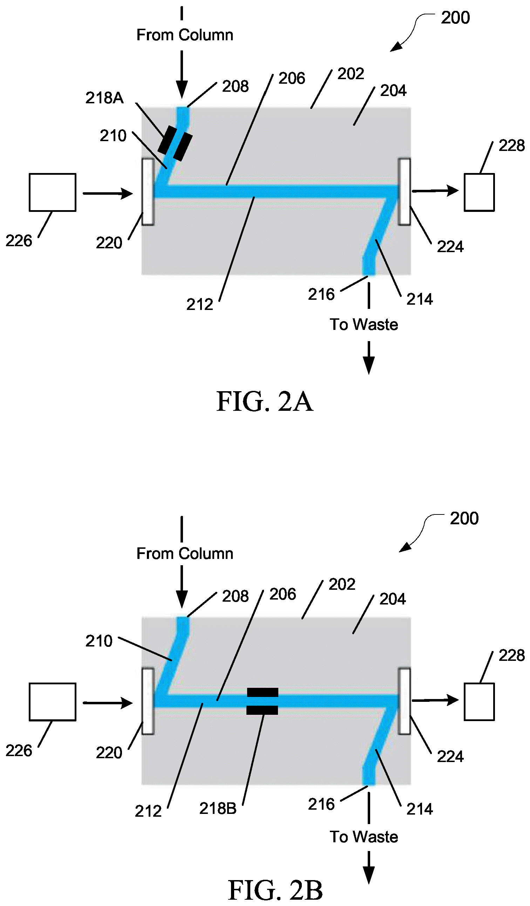

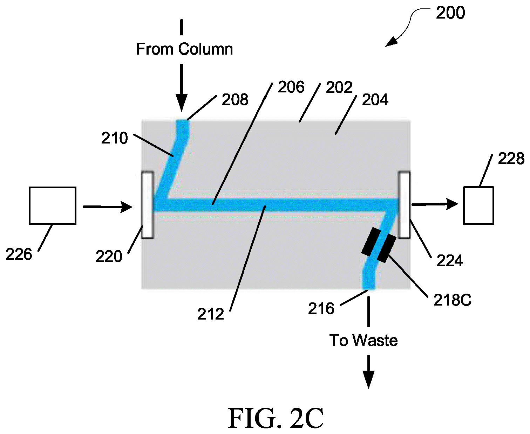

Figures 2A, 2B, and 2C illustrate a detector module 200 for combined optical and conductance measurements. Detector module 200 can be used as detector module 116 in Figure 1. Detector module 200 can include a flow cell 202 including a substrate 204 having a flow path 206. In various embodiments, the flow cell 202 can be thermally regulated to maintain the temperature of a fluid traveling along the flow path. In particular embodiments, the substrate 202 can be coupled to one or more devices for adjusting and controlling the temperature, such as a heater, a heat exchanger, a passive cooling device, an active cooling device, a heat pump, other devices known in the art, or any combination thereof. In particular embodiments, the thermal regulation can be achieved using a feedback loop, such as by coupling the substrate 204 with a temperature sensor and using the information from the temperature sensor to regulate the operation of one or more devices for adjusting and controlling the temperature.

The flow path 206 can include an entrance 208, and entrance segment 210, a linear segment 212, an exit segment 214, and an exit 216. A plurality of electrodes 218 of a conductivity detector can be placed along the flow path 206 and in contract with the fluid flowing along the flow path 206. In Figure 2A, the electrodes 218A are placed along the entrance segment 210. In Figure 2B, the electrodes 218B are placed along the linear segment 212. In Figure 2C, the electrodes 218C are placed along the exit segment 214. In various embodiments, the conductivity detector can measure the conductivity of the solution flowing along the flow path. In various embodiments, the conductivity detector can measure changes in the electrical conductivity of the eluent to detect and quantify compounds in the sample flowing through the flow cell 202.

The flow cell 202 can also included a first optical window 220 located at a first end of the linear segment 212 and a second optical window 224 located at the second end of the linear segment 212. Detector module 200 also includes a light source 226 positioned in proximity to the first optical window 220 and an optical detector 228 positioned in proximity to the second optical window 224. Light from light source 226 can be directed through the first optical window 220, along the linear segment 212, through the second optical window 224, to the optical detector 228. In various embodiments, the light source 226 can be an ultraviolet-visible (UV-Vis) light source and the optical detector 228 can be an ultraviolet-visible (UV-Vis) detector. In various embodiments, the optical source can be a deuterium lamp, a halogen lamp, a xenon lamp, a mercury lamp, a light-emitting diode (LED) source, a laser source, or any combination thereof. In various embodiments, the optical detector can be a photomultiplier tube, a photoelectric cell, a diode array, a charge coupled device (CCD), or any combination thereof.

In various embodiments, the optical detector 228 can measure an absorption spectra of the solution flowing through the linear segment 212 of the flow path 206. In particular embodiments, the absorption spectra can span at least a portion of the visible spectrum and the ultra-violet spectrum. In other embodiments, the adsorption spectra can span at least a portion of the infrared spectrum.

In various other embodiments, the optical detector 228 can measure florescence of compounds in the solution flowing through the linear segment 212 of the flow path 206. In yet another embodiment, the optical detector 228 can measure the Raman scattering of compounds in the solution flowing through the linear segment 212 of the flow path 206.

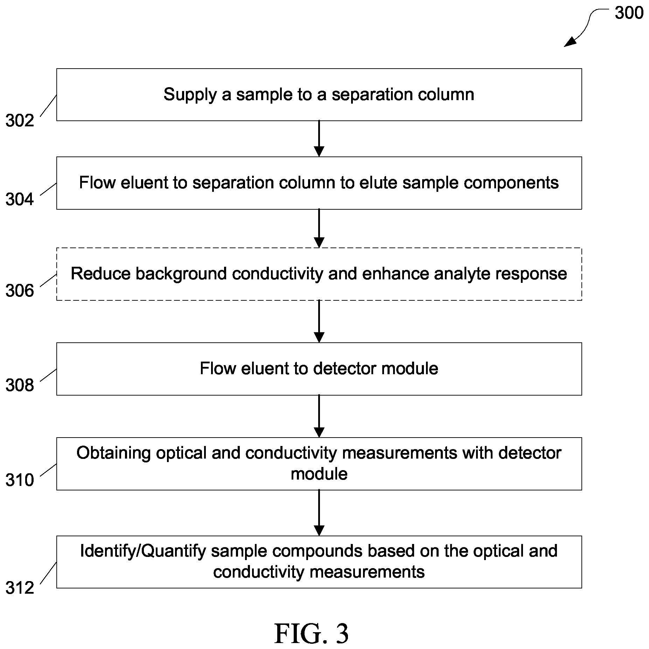

Figure 3 is a flow diagram illustrating a method 300 of chromatographically analyzing a sample, such as by using chromatographic system 100 of Figure 1 and detector module 200 of Figures 2A, 2B, or 2C. At 302, the sample can be supplied to a separation column, such as separation column 112 of Figure 1. At 304, an eluent can be supplied to separation column 112 to eluent sample compounds from the separation column. Typically, the separation column is packed with a chromatographic material that can differentially interact with compounds in the solution based on various properties, such as ionic charge, hydrophobicity, polarity, and the like. This results in a separation of the compounds in the sample based on the relative interaction strengths of the compounds with the chromatographic material. Compounds with a weaker interaction pass through the column more quickly having a shorter retention time, while compounds with stronger interactions can pass through the column more slowly resulting in a longer retention time.

Optionally, at 306, the background conductivity of the eluent can be reduced and the analyte conductivity response can be enhanced using a suppressor, such as suppressor 114 of Figure 1. The suppressor can remove conductive eluent counter ions and convert ions of interest into a more conductive form.

At 308, the eluent can flow to a detector module, such as detector module 200 of Figures 2A, 2B, or 2C. At 310, the detector module can obtain optical measurements and conductivity measurements of the compounds flowing through the detector module. In various embodiments, light from a light source, such as light source 226 of Figure 2, can be directed along a light path through a first optical window, along a linear segment of a flow path within the detector module, through a second optical window and to an optical detector, such as optical detector 228 of Figure 2. The optical detector can make optical measurements while the conductivity detector can measure the conductivity of the solution flowing along the flow path. In various embodiments, the optical measurements can be an absorption spectra spanning at least a portion of the visible spectrum and the ultra-violet spectrum. In other embodiments, the adsorption spectra can span at least a portion of the infrared spectrum. In other embodiments, the optical measurements can include fluorescence measurements or Raman scattering measurements.

At 312, sample compounds can be identified and/or quantified based on the optical and conductivity measurements.

While the present teachings are described in conjunction with various embodiments, it is not intended that the present teachings be limited to such embodiments. On the contrary, the present teachings encompass various alternatives, modifications, and equivalents, as will be appreciated by those of skill in the art.

Further, in describing various embodiments, the specification may have presented a method and/or process as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process should not be limited to the performance of their steps in the order written, and one skilled in the art can readily appreciate that the sequences may be varied and still remain within the spirit and scope of the various embodiments.

### Various examples are set out in the following clauses:

Clause 1. A detector module for combined optical and conductance measurements, the flow cell comprising: a flow cell including a substrate; a flow path formed on the substrate, the flow path including an entrance, a linear segment, and an exit, the linear segment having a first end and a second end; a conductivity sensor including a plurality of electrodes within the flow path; a first optical window at the first end of the linear segment; and a second optical window at the second end of the linear segment; a light source to produce light, the light source positioned in proximity to the first optical window; and an optical detector for detecting light, the optical detector positioned in proximity to the second optical window; wherein light from the light source travels along a light path from the light source, through the first optical window, along the linear segment, through the second optical window, and to the optical detector.
Clause 2. The detector module of clause 1, wherein the substrate is thermally regulated.
Clause 3. The detector module of clause 1, further comprising an entrance segment between the entrance and the linear segment.
Clause 4. The detector module of clause 3, wherein the conductivity sensor is positioned along the entrance segment.
Clause 5. The detector module of clause 1, further comprising an exit segment between the linear segment and the exit.
Clause 6. The detector module of clause 5, wherein the conductivity sensor is positioned along the exit segment.
Clause 7. The detector module of clause 1, wherein the conductivity sensor is positioned along the linear segment.
Clause 8. The detector module of clause 1, wherein the light source is an ultraviolet-visible (UV-Vis) light source and the optical detector is a (UV-Vis) detector.
Clause 9. The detector module of clause 1, wherein the optical detector is a fluorescence spectrometer or a Raman spectrometer.
Clause 10. A chromatography system comprising: a pump; a chromatography column; and the detector module of clause 1.
Clause 11. The chromatography system of clause 10, wherein the chromatography system further includes a suppressor positioned between the chromatography column and the detector module.
Clause 12. A method of analyzing a sample, the method comprising: supplying a sample to a chromatography column; eluting sample compounds from the chromatography column; flowing the sample compounds from the chromatography column to a detector module, the detector module including: a flow cell including: a substrate; a flow path formed on the substrate, the flow path including an entrance, a linear segment, and an exit, the linear segment having a first end and a second end; a conductivity sensor including a plurality of electrodes within the flow path; a first optical window at the first end of the linear segment; and a second optical window at the second end of the linear segment; a light source to produce light, the light source positioned in proximity to the first optical window; and an optical detector for detecting light, the optical detector positioned in proximity to the second optical window; providing light from the light source along a light path through the first optical window, along the linear segment, through the second optical window, and to the optical detector; and obtaining optical measurement date using the optical detector and conductivity data using the conductivity detector of the sample compounds flowing through the flow cell.
Clause 13. The method of clause 12, further comprising thermally regulating the substrate.
Clause 14. The method of clause 12, wherein the flow path further includes an entrance segment between the entrance and the linear segment.
Clause 15. The method of clause 14, wherein the conductivity sensor is positioned along the entrance segment of the flow path.
Clause 16. The method of clause 12, wherein the flow path further includes an exit segment between the linear segment and the exit.
Clause 17. The method of clause 16, wherein the conductivity sensor is positioned along the exit segment of the flow path.
Clause 18. The method of clause 12, wherein the conductivity sensor is positioned along the linear segment of the flow path.
Clause 19. The method of clause 12, wherein the light source is an ultraviolet-visible (UV-Vis) light source, the optical detector is a (UV-Vis) detector, and the optical measurement data is a UV-Vis absorbance spectra.
Clause 20. The method of clause 12, further comprising reducing eluent conductivity background and enhancing analyte response using a suppressor after the chromatography column and prior to the detector module.
Clause 21. The method of clause 12, further comprising identifying and/or quantifying sample compounds based on the optical measurement data and the conductivity data.
Clause 22. The method of clause 12, wherein the optical measurement data is an absorbance measurement, a fluorescence measurement, a Raman scattering measurement, or any combination thereof.

## Claims

1. A detector module for combined optical and conductance measurements, the flow cell comprising:
a flow cell including
a substrate;
a flow path formed on the substrate, the flow path including an entrance, a linear segment, and an exit, the linear segment having a first end and a second end;
a conductivity sensor including a plurality of electrodes within the flow path;
a first optical window at the first end of the linear segment; and
a second optical window at the second end of the linear segment;
a light source to produce light, the light source positioned in proximity to the first optical window; and
an optical detector for detecting light, the optical detector positioned in proximity to the second optical window;
wherein light from the light source travels along a light path from the light source, through the first optical window, along the linear segment, through the second optical window, and to the optical detector.

2. The detector module according to claim 1, wherein the substrate is thermally regulated.

3. The detector module according to claim 1 or 2, further comprising an entrance segment between the entrance and the linear segment.

4. The detector module according to claim 3, wherein the conductivity sensor is positioned along the entrance segment.

5. The detector module according to any one of claims 1 to 4, further comprising an exit segment between the linear segment and the exit.

6. The detector module according to claim 5, wherein the conductivity sensor is positioned along the exit segment.

7. The detector module according to any one of claims 1 to 6, wherein the conductivity sensor is positioned along the linear segment.

8. The detector module according to any one of claims 1 to 7, wherein the light source is an ultraviolet-visible (UV-Vis) light source and the optical detector is a (UV-Vis) detector.

9. The detector module according to any one of claims 1 to 7, wherein the optical detector is configured for fluorescence spectroscopy or Raman spectroscopy.

10. A chromatography system comprising:
a pump;
a chromatography column;
and the detector module according to any one of claims 1 to 9.

11. The chromatography system of claim 10, wherein the chromatography system further includes a suppressor positioned between the chromatography column and the detector module.

12. A method of analyzing a sample, the method comprising:
supplying a sample to a chromatography column;
eluting sample compounds from the chromatography column;
flowing the sample compounds from the chromatography column to a detector module, the detector module including:
a flow cell including:
a substrate;
a flow path formed on the substrate, the flow path including an entrance, a linear segment, and an exit, the linear segment having a first end and a second end; and
a conductivity sensor including a plurality of electrodes within the flow path;
providing light from a light source along a light path through a flow cell of the detector module; and
obtaining optical measurement data and conductivity data of the sample compounds.

13. The method according to claim 12, further comprising thermally regulating the substrate.

14. The method according to claim 12 or 13, further comprising identifying and/or quantifying sample compounds based on the optical measurement data and the conductivity data.

15. The method according to any one of claims 12 to 14, wherein the optical measurement data is an absorbance, fluorescence, Raman scattering, or any combination thereof.
